# EUROPEAN PATENT SPECIFICATION

(11) **EP 0 333 397 B1**
(45) Date of publication and mention of the grant of the patent: **20.01.1993**
(21) Application number: 89302430.7
(22) Date of filing: 13.03.1989
(51) Int. Cl.: B60C 11/11, B60C 11/12

(54) **Radial tyre**
Radialer Luftreifen
Pneumatique radial

(30) Priority: 14.03.1988 JP 61354/88
(43) Date of publication of application: 20.09.1989
(73) Proprietor: SUMITOMO RUBBER INDUSTRIES LIMITED, Chuo-ku Kobe-shi Hyogo 651 (JP)
(72) Inventor: Ochiai, Kiyoshi, Kobe-shi Hyogo-ken (JP); Iuchi, Munenori, Kobe-shi Hyogo-ken (JP)
(74) Representative: Stewart, Charles Geoffrey

(56) References cited:
- EP-A- 0 199 570
- EP-A- 0 205 233
- EP-A- 0 282 252
- DE-A- 2 918 183
- FR-A- 2 564 385
- GB-A- 2 190 048

## Description

The present invention relates to a pneumatic radial ply tyre and more particularly a block or block rib type tread pattern tyre.

In general, radial ply tyres are provided, radially outwardly of a toroidal carcass reinforced by steel or organic fibre cords, with a belt comprising a plurality of plies of steel cords arranged at angles of 15 to 70 degrees with respect to the circumferential direction of the tyre. Accordingly, the tread portion of such a radial tyre is substantially rigid, and as a result, the ground contact pressure becomes less in both side regions compared to the central region. Also the amount of slip of the tread on the ground is greater in the side regions than in the central region. Thus, uneven wear in the side (shoulder) regions of the tread, so called shoulder wear, is liable to happen. This problem is a particular problem in heavy duty tyres for truck and buses.

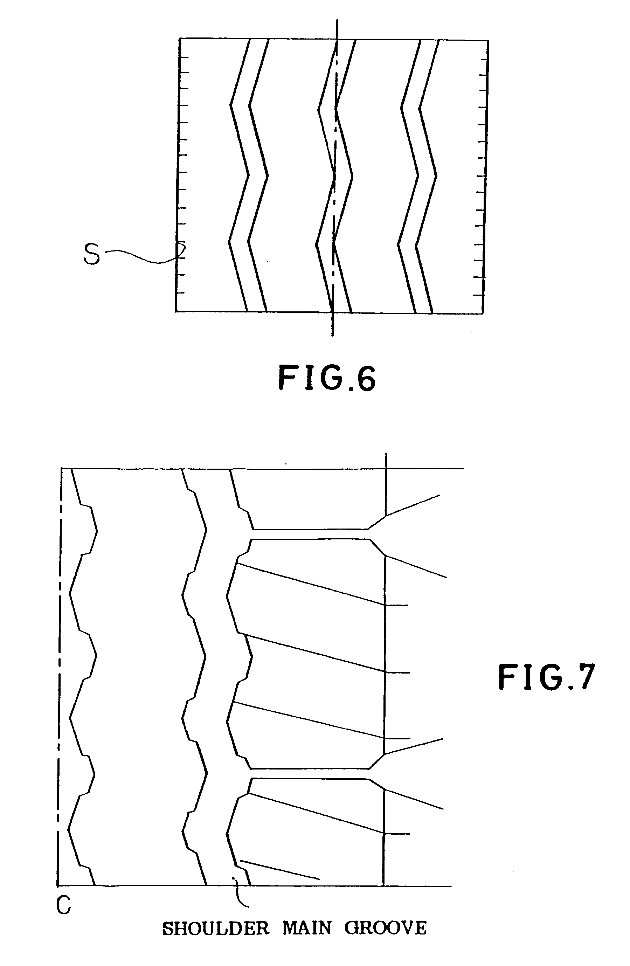

To try to solve this problem, it has been proposed, as shown in Figure 6, to form a plurality of short cuts S in the edge regions of the tread so as to facilitate movement of the rubber in these regions and accordingly to reduce the apparent rigidity thereof and to lessen the slip of those regions on the ground. The cuts are arranged to extend parallel with the axial direction of the tyre, and the cuts are very short in length having a length of less than 5% of the overall tread width, and also they are shallow in depth.

Furthermore, in a tread divided by a pair of circumferentially extending zig zag main shoulder grooves and axially extending grooves to form shoulder blocks in both side regions as shown in Figure 7, it has been proposed to use a plurality of circumferentially spaced cuts, each extending from the main shoulder groove to the tread edge, across each shoulder block. The cuts S proposed and shown in Figure 6 were however so short and shallow that they did not control the distribution of the ground contact pressure in the widthwise direction of the tread, and so they were not effective in preventing uneven wear.

On the other hand, the shoulder blocks shown in Figure 7 had projecting portions because the main shoulder grooves extend in a zig zag shape. These projecting portions were low in rigidity and moved easily. The cuts added further to this decrease in rigidity of the blocks, and so again caused uneven wear of the tread.

A tyre according to the preamble of claim is known, e.g. from EP-A- 0 199 570. Thereby the range of the intervals of the sipes is 5 to 50 mm, preferably 10 to 30 mm, the depth of each sipe is 50% et 110% of the depth of the main groove and the sipes are inclined at an angle of 0°-60°, preferably 10°-40° to the axial direction of the tyre.

It is an object of the present invention to provide a radially ply tyre especially suitable for heavy duty use, in which the distribution of the amount of slip of the tread on the ground is evened out without deterioration in wet grip and traction to reduce uneven wear of the tread.

Accordingly the invention provides a radial tyre having a tread provided with a pair of main grooves extending circumferentially of the tyre and a plurality of lateral grooves extending axially of the tyre at least between the main grooves to form thereon either a block type tread pattern or a block-rib type tread pattern having side regions, the tread being provided with sipe across both side regions, the sipes having substantially no groove width, being inclined at an acute angle to the axial direction of the tyre and extending from the tread edges and being spaced apart at intervals in the circumferential direction of the tyre, characterised in that the depth of each sipe is 20 to 120% of the depth of the main grooves, the side regions have a width of 10 to 35% of the overall width of the tread, said intervals are 8 to 20 mm and each sipe comprises an inclined main portion and a less inclined outer axial portion axially outside the main portion, said inclined main portion being inclined at an angle of 5 to 25 degrees to the axial direction of the tyre, and said less inclined outer axial portion extending at an angle of less than 5 degrees to the axial direction.

From EP-A-0 282 252 (published on 14.9.88 and cited under Art. 54(3) EPC) is known a tyre very similar to that of this invention, but without any lateral grooves. The sipes preferably gradually increase in depth towards the respective edges of the tread.

In the present invention, a sipe means a cut having no width formed by using a thin blade after vulcanisation of the tyre, so that the sipe has substantially no groove width.

Embodiments of the present invention will now be described by way of example only, in conjunction with the attached diagrammatic drawings in which:
Figures 1 and 2 are left half plan view showing treads of the embodiments of the present invention;
Figures 3 and 5 are sectional views taken along the line B-B of Figure 1 showing the sipe and modifications thereof; and
Figures 6 and 7 are partial plan view showing tyres according to the prior art.

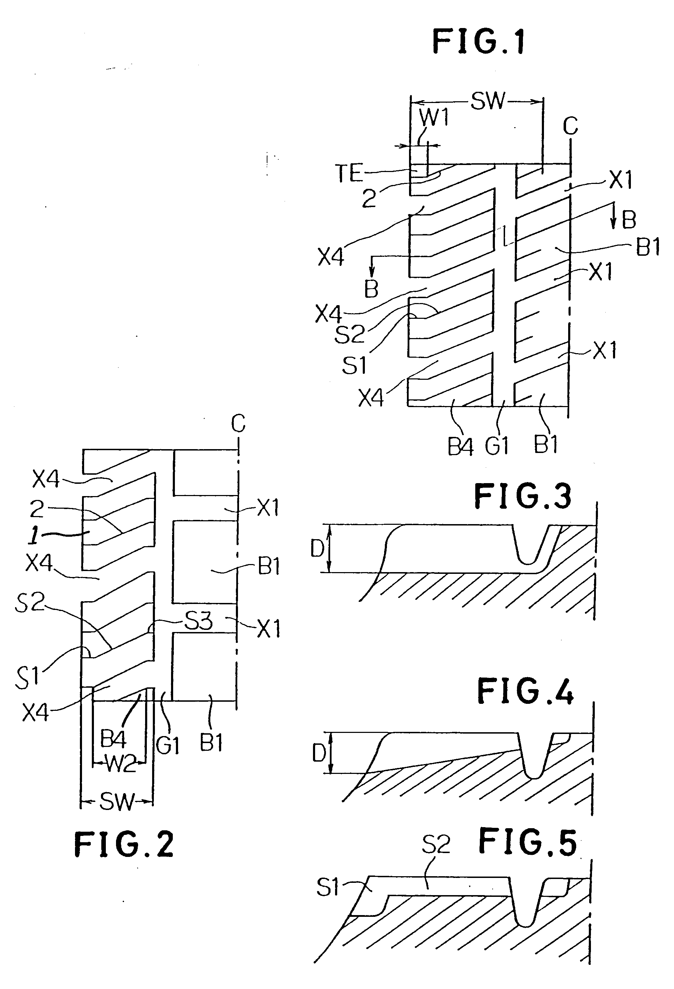

In Figure 1 sipes 2 are formed in each side region SW of a tyre tread extending axially inwardly for 10 to 35% of the overall width TW of the tread from each tread edge TE. That means that the length of each sipe in the axial direction of the tyre is 10 to 35% of the tread width TW.

The sipes 2 are arranged at intervals of 8 to 20mm in the circumferential direction around the tyre.

Each sipe 2 has a main portion S2 inclined at an angle 5 to 25 degrees with respect to the axial direction of the tyre.

The depth D of each sipe 2 is 20 to 120% of the depth of the lateral grooves X1,X4.

The sipes 2 reduce the rigidity in compressive and bending deformation, of the tread rubber in the side regions, and the tread rubber can thus be easily bent and pressed to the ground. Accordingly, the ground pressure in the side regions is increased and the amount of slip thereof is decreased. As a result, uneven wear in the shoulder regions is reduced, and traction and braking forces are improved. Furthermore, the sipes 2 open on contact with the ground and close on leaving the ground so that the edges formed by opening of the sipes give improved wet grip.

If the sipes are too shallow, the above-mentioned effects are not obtained. On the other hand, if the sipes are too deep, the rigidity of the tread becomes too small, and the tread is liable to have portions torn off and thus be damaged.

The above-mentioned depth D of the sipes 2 is more preferably in the range of 50 to 100% of the depth of the lateral grooves.

If there are different depth lateral grooves in the tread, then the above-mentioned depth is defined as the deepest one.

If the angle of the main portion S2 is smaller than 5 degrees, the central portion of the side blocks B4 is decreased in rigidity, and the wear resistance and strength thereof become too little. On the contrary, if more than 25 degrees, the amount of slip increases, and the meritorious effect of the sipes is lost.

Several kinds of sipes with different lengths and/or different depths may be combined in one tread.

Furthermore, if the interval is smaller than 8mm, the wear resistance and the strength thereof are decreased. On the contrary if it is larger than 20mm, the rigidity of the tread side regions becomes too high, and the amount of slip thereof or uneven wear is not reduced.

A second embodiment, not illustrated, is a pattern of the shoulder rib/central block type. Such a pattern has straight main grooves defined in rib continuous rib in each shoulder of the tyre and in the central region transverse grooves form blocks. In this case the sipes extend from the tread edge across the shoulder ribs to the straight main grooves. They work in the same way as described for the first embodiment.

In the embodiments shown in the Figures 1 and 2 the right half may be formed either in a line symmetry with respect to the centre line C, or in a point symmetry with respect to the centre line C.

In the tyre of Figure 1 the tread is provided with two rows of side blocks B4 formed by circumferentially extending straight main grooves G1 and lateral grooves X4 and a row of centre blocks B1 formed by the main grooves G1 and lateral grooves X1. Each sipe 2 extends across the side blocks B1 from the tread edge Te into the central blocks B1 beyond the straight main groove G1, so that additionally slip of the block edges on each side of the straight main groove is reduced. As a result, the generation of so called railway wear is effectively prevented.

Further, each sipe 2 is provided arially outside its inclined main portion S2 with an axial portion S1 substantially parallel to the axial direction of the tyre.

The axial length W1 of the axial portion S1 is not more than 10% of the tread width TW, and not more than 50% of the axial length SW of the sipe 2.

The angle of the axial portion S1 to the axial direction of the tyre is not more than 5 degrees, whereby the slip of the tread edge portions is reduced and edge wear is effectively prevented.

In the tyre of Figure 2, each side of the tread thereof is provided with a row of side blocks B4 formed by circumferentially extending straight main grooves G1 and lateral grooves X4. A row of centre blocks B1 is formed by the main grooves G1 and lateral grooves X1. Each sipe 2 extends from the tread edge to the straight main grooves G1 across the side block B4.

Also each sipe 2 is provided axially outside and inside its inclined main portion S2 with an axial portion S1 and an axial portion S3, respectively. Both the outer axial portion S1 and inner axial portion S3 are substantially parallel to the axial direction of the tyre.

The axial length W2 of the main portion S2 is not less than 50% of the axial length SW of the whole sipe 2.

Figures 3 to 5 are sectional views showing modifications of the sipe based on the example of figure 1 taken along the line B-B .

In Figure 3 the depth D of the sipe 2 is constant in the axial direction of the tyre.

In Figure 4 the depth D is gradually decreased toward the tread edge TE from its inner end.

In Figure 5 the axial portion S1 is deeper in depth than the main portion S1. The main portion may be inclined. Such changes in the cut depth in the axial direction of the tyre can control the ground pressure distribution of the widthwise direction of the tread.

These modifications as shown in Figures 3 to 5 can be applied to the sipes of Figure 2.

The depth of the lateral grooves which define the side blocks B4 is not more than the depth of the main grooves G1. The depth of the lateral grooves which define the central blocks is not more than the depth of the main groove.

As mentioned above, according to the present invention, the sipes in a block type or a crown block shoulder type tread pattern, are optimised in terms of depth intervals angle at which the sipes are arranged, arid range in which the sipes are formed, so as to equalise the ground pressure distribution in the widthwise direction of the tread. As a result, the amount of slip is decreased in the shoulder portions, and thus uneven wear is effectively prevented.

By the way, the circumferential main grooves which define the side blocks or the side ribs are straight, so that the rigidity of the side blocks or the side ribs is unified, and shoulder wear and railway wear are effectively prevented without deteriorating wet grip and traction.

## Claims

1. A radial tyre having a tread (1) provided with a pair of main grooves (G1) extending circumferentially of the tyre and a plurality of lateral grooves (X1) extending axially of the tyre at least between the main grooves (G1) to form thereon either a block type tread pattern or a block-rib type tread pattern having side regions (SW), the tread (1) being provided with sipes (2) across both side regions (SW), the sipes (2) having substantially no groove width, being inclined at an acute angle to the axial direction of the tyre and extending from the tread edges (TE) and being spaced apart at intervals in the circumferential direction of the tyre, characterised in that the depth (D) of each sipe (2) is 20 to 120% of the depth of the main grooves (G1), the side regions (SW) have a width of 10 to 35% of the overall width (TW) of the tread (1), said intervals are 8 to 20 mm and each sipe (2) comprises an inclined main portion (S2) and a less inclined outer axial portion (S1) axially outside the main portion, said inclined main portion being inclined at an angle of 5 to 25 degrees to the axial direction of the tyre, and said less inclined outer axial portion (S1) extending at an angle of less than 5 degrees to the axial direction.

2. A radial tyre according to claim 1 characterised in that the axial length of said inclined main portion (S2) is not less than 5% of the axial length of the sipe (2), and the axial length of said less inclined outer axial portion (S1) is not more than 10% of said tread width width (TW).

3. A radial tyre according to claim 1 or 2 characterised in that each sipe (2) is further provided axially inside said inclined main portion (S2) with a less inclined inner axial portion (S3).

4. A radial tyre according to either claim 1 or 2 characterised in that the tread (1) is provided with side blocks (B4) defined between the tread edges (TE) and the main grooves (G1) and central blocks (B1) defined by the main grooves (G1) to form a block type tread pattern, and the sipes (2) extend across the side blocks (B4) from the tread edges (TE) into the central blocks (B1) beyond the main grooves (G1).

## Patentansprüche

1. Radialreifen mit einer Lauffläche (1) ausgestattet mit einem Paar von Haupt-Rillen (G1), die kreisförmig am Reifen verlaufen und einer Vielzahl von seitlichen Rillen (X1) die sich axial auf dem Reifen wenigstens zwischen den Haupt-Rillen (G1) erstrecken, um darauf entweder ein blockförmiges Laufflächenmuster oder ein block-rippenförmiges Laufflächenmuster mit Seitenbereichen (SW) zu bilden, wobei die Lauffläche (1) mit Einschnitten (2) über beide Seitenbereiche (SW) versehen ist, die Einschnitte (2) im wesentlichen keine Rillenbreite besitzen, in einem spitzen Winkel zu der Axialrichtung des Reifens geneigt sind, und sich von den Rändern der Lauffläche (TE) aus erstrecken und durch Zwischenräume in Umfangs-Richtung des Reifens beabstandet sind,
dadurch **gekennzeichnet,**
daß die Tiefe (D) eines jeden Einschnitts (2) 20 bis 120% der Tiefe der Haupt-Rillen (G1) beträgt, die Seitenbereiche (SW) eine Breite von 10 bis 35 % der Gesamtbreite (TW) der Lauffläche (1) besitzen, diese Zwischenräume 8 bis 20 mm betragen und jeder Einschnitt (2) einen geneigten Haupt-Abschnitt (S2) und einen weniger geneigten, axial-außerhalb des Haupt-Abschnitts liegenden äußeren Axial-Abschnitt (S1) besitzt, der Haupt-Abschnitt mit einem Winkel von 5 bis 25 Grad gegenüber der Axialrichtung des Reifens geneigt ist, und der weniger geneigte, äußere Axial-Abschnitt (S1) unter einem Winkel von weniger als 5 Grad zur Axialrichtung verläuft.

2. Radialreifen nach Anspruch 1,
dadurch **gekennzeichnet,**
daß die axiale Länge des geneigten Haupt-Abschnitts (S2) nicht weniger als 5 % der axialen Länge des Einschnittes (2) beträgt, und die axiale Länge des weniger geneigten äußeren axialen Abschnitts (S1) nicht mehr als 10 % der Laufflächenbreite (TW) beträgt.

3. Radialreifen nach Anspruch 1 oder 2,
dadurch **gekennzeichnet,**
daß jeder Einschnitt (2) weiter in axialer Richtung mit einem weniger geneigten inneren axialen Abschnitt in den geneigten Haupt-Abschnitt (S2) geführt ist.

4. Radialreifen nach einem der Ansprüche 1 oder 2,
dadurch **gekennzeichnet,**
daß die Lauffläche (1) ausgestattet ist mit Seitenblöcken (B4), die zwischen den Laufflächenrändern (TE) und den Haupt-Rillen (G1) gelegen sind, und zentrale Blöcke (B1), die durch die Haupt-Rillen (G1) definiert sind und ein blockförmiges Laufflächenmuster bilden, und den Einschnitten (2), die über die Seitenblöcke (B4) von den Laufflächenrändern (TE) in die Zentralblöcke (B1) jenseits der Haupt-Rillen (G1) verlaufen.

## Revendications

1. Pneumatique à carcasse radiale, comportant une bande de roulement (1) qui a deux gorges principales (G1) disposées à la circonférence du pneumatique et plusieurs gorges latérales (X1) disposées sur un axe du pneumatique au moins entre les gorges principales (G1) afin qu'elles forment un dessin de sculpture du type à blocs ou un dessin de sculpture du type à côtes et blocs ayant des régions latérales (SW), la bande de roulement (1) ayant des fines découpes (2) transversalement aux deux régions latérales (SW), les fines découpes (2) ayant une largeur pratiquement nulle, étant inclinées afin qu'elles forment un angle aigu avec la direction axiale du pneumatique, partant des bords de la bande de roulement (TE) et étant séparées à certains intervalles dans la direction circonférentielle du pneumatique, caractérisé en ce que la profondeur (D) de chaque fine découpe (2) est comprise entre 20 et 120 % de la profondeur des gorges principales (G1), les régions latérales (SW) ont une largeur comprise entre 10 et 35 % de la largeur totale (TW) de la bande de roulement (1), les intervalles sont compris entre 8 et 20 mm, et chaque fine découpe (2) a une partie principale inclinée (S2) et une partie axiale externe moins inclinée (S1) disposée axialement à l'extérieur de la partie principale, la partie principale inclinée faisant un angle de 5 à 25° avec la direction axiale du pneumatique, et la partie axiale externe moins inclinée (S1) étant disposée afin qu'elle forme un angle inférieur à 5° avec la direction axiale.

2. Pneumatique à carcasse radiale selon la revendication 1, caractérisé en ce que la longueur axiale de la partie principale inclinée (S2) n'est pas inférieure à 5 % de la longueur axiale de la fine découpe (2), et la longueur axiale de la partie axiale externe moins inclinée (S1) ne dépasse pas 10 % de la largeur (TW) de la bande de roulement.

3. Pneumatique à carcasse radiale selon la revendication 1 ou 2, caractérisé en ce que chaque fine découpe (2) a en outre, à l'intérieur de la partie principale inclinée (S2) en direction axiale, une partie axiale interne moins inclinée (S3).

4. Pneumatique à carcasse radiale selon la revendication 1 ou 2, caractérisé en ce que la bande de roulement (1) a des blocs latéraux (B4) délimités entre les bords (TE) de la bande de roulement et les gorges principales (G1), et des blocs centraux (B1) délimités par les gorges principales (G1) afin qu'ils forment une sculpture de bande de roulement du type à blocs, et les fines découpes (2) sont disposées transversalement aux blocs latéraux (B4) des bords (TE) de la bande de roulement-vers les blocs centraux (B1) au-delà des gorges principales (G1).
